# EUROPÄISCHE PATENTSCHRIFT

(11) **EP 4 487 968 B1**
(45) Veröffentlichungstag und Bekanntmachung des Hinweises auf die Patenterteilung: **05.08.2026**
(21) Anmeldenummer: 24180694.2
(22) Anmeldetag: 07.06.2024
(51) Int. Cl.: B07C 5/36, A47L 15/42, B25J 11/00, B25J 9/16

(54) **SORTIERVORRICHTUNG UND SORTIERVERFAHREN FÜR BESTECK, SOWIE SYSTEM**
SORTING DEVICE AND METHOD FOR CUTLERY. AND SYSTEM
DISPOSITIF ET PROCÉDÉ DE TRI DE COUVERTS, ET SYSTÈME

(30) Priorität: 07.07.2023 DE 102023206471
(43) Veröffentlichungstag der Anmeldung: 08.01.2025
(73) Patentinhaber: BSH Hausgeräte GmbH, 81739 München (DE)
(72) Erfinder: Horst, Gerald, 76131 Karlsruhe (DE); Koene, Philip, 81245 München (DE); Schaefer, Frank, 82178 Puchheim (DE); Michel, Florian, 85658 Egmating (DE); Rychly, Leonard, 81541 München (DE); Franke, Corinna, 85354 Freising (DE); Hage, Clemens, 81829 München (DE); Mikusch, Michael, 81735 München (DE)

(56) Entgegenhaltungen:
- US-A1- 2021 001 488

## Beschreibung

Die vorliegende Erfindung betrifft das Sortieren von Besteck. Insbesondere betrifft die Erfindung eine Sortiervorrichtung für das Sortieren von Besteck aus einem Besteckkorb, sowie ein entsprechendes Sortierverfahren.

Ein Geschirrspüler ist dazu eingerichtet, Küchenutensilien aufzunehmen und zu reinigen. Geschirr oder Töpfe können in einem Geschirrwagen angeordnet werden, für Besteck kann eine Besteckschublade oder ein Besteckkorb vorgesehen sein. Die Besteckschublade ermöglicht das Einsortieren von Besteck bereits bei der Beladung des Geschirrspülers, sodass es nach erfolgtem Reinigungsvorgang sortiert entnommen und verstaut werden kann. Allerdings kann das Sortieren mühsam oder unangenehm sein, insbesondere wenn das Besteck stark verschmutzt ist. Außerdem kann die Besteckschublade wertvollen vertikalen Raum im Geschirrspüler belegen, der dann beispielsweise nicht mehr für langstielige Gläser oder hohe Töpfe zur Verfügung steht.

Der Besteckkorb ist eine raumsparende Alternative, die ein rascheres und insbesondere ungeordnetes Einlegen von Besteck erlaubt. Allerdings muss das Besteck nach dem Reinigungslauf sortiert werden, um geordnet beispielsweise in einer Besteckschublade abgelegt werden zu können.

WO 2021 006 306 A1 schlägt einen Roboter vor, der dazu eingerichtet ist, Geschirr von einem Förderband zu greifen, welches Teil einer Spülstraße ist. Aus der US 2021/0001488 A1 ist ein Sortiersystem für Besteck vorbekannt.

DE 10 2020 204 083 A1 betrifft das dynamische Herunterladen von Programmcodemitteln, um mittels eines Roboters Geschirr an einer Geschirrspülmaschine zu handhaben.

Bekannte Techniken zur Unterstützung beim Beladen oder Entladen eines Geschirrspülers konzentrieren sich üblicherweise auf Geschirr und vernachlässigen Besteck. Einer automatischen Handhabung von Besteck in einem Besteckkorb steht entgegen, dass das Besteck in schwer vorhersagbaren Lagen bzw. Konstellationen anzutreffen ist, sodass es schwierig gegriffen und aus dem Besteckkorb entfernt werden kann. Häufig ist Besteck nach dem Reinigungsvorgang im Besteckkorb verhakt, verflochten oder verkeilt, sodass es kaum automatisch entfernt werden kann.

Eine der vorliegenden Erfindung zu Grunde liegende Aufgabe besteht in der Bereitstellung einer verbesserten Technik zum Sortieren von Besteck aus einem Besteckkorb. Die Erfindung löst diese Aufgabe mittels der Gegenstände der unabhängigen Ansprüche. Unteransprüche geben bevorzugte Ausführungsformen wieder.

Nach einem ersten Aspekt der vorliegenden Erfindung umfasst eine Sortiervorrichtung für Besteck die Merkmale des unabhängigen Anspruchs 1, insbesondere eine optische Abtastvorrichtung zur Abtastung eines Besteckkorbs; einen beweglichen Greifer für ein Besteck; und eine Verarbeitungseinrichtung. Dabei ist die Verarbeitungseinrichtung dazu eingerichtet, Besteck im Besteckkorb zu erkennen; ein erkanntes Besteck auszuwählen; und den Greifer dazu anzusteuern, das ausgewählte Besteck zu greifen und aus dem Besteckkorb in eine vorbestimmte Ablage zu bewegen. Darüber hinaus ist die Verarbeitungseinrichtung dazu eingerichtet, ein Besteck auf der Basis eines Grads auszuwählen, mit dem das Besteck mit anderem Besteck und/oder mit dem Besteckkorb verflochten ist.

Dabei kann das Besteck klassifiziert werden, und Besteck unterschiedlicher Klassen kann in zugeordneten Ablagen bzw. Fächern der Ablage gesammelt werden. So kann Besteck unterschiedlicher Klassen in jeweils zugeordnete Ablagen bzw. Fächer sortiert werden.

Der Besteckkorb ist bevorzugt zur Reinigung des Bestecks in einem Geschirrspüler eingerichtet. Der Geschirrspüler ist bevorzugt ein Haushaltsgerät, der zum Einsatz in einem Privathaushalt eingerichtet sein kann. Der Besteckkorb kann Teil des Geschirrspülers sein. In einer Ausführungsform ist die Sortiervorrichtung dazu eingerichtet, das Besteck aus dem Besteckkorb zu entnehmen, während der Besteckkorb im Geschirrspüler angeordnet ist. In einer anderen Ausführungsform kann der Besteckkorb aus dem Geschirrspüler entnommen und in einen Arbeitsbereich der Sortiervorrichtung gebracht werden. Die Sortiervorrichtung kann dazu eingesetzt werden, das von vielen Benutzern als lästig empfundene Entnehmen und Sortieren von Besteck nach einem erfolgten Reinigungslauf des Geschirrspülers durchzuführen. Die Ablage kann beispielsweise eine Besteckschublade umfassen, in der das Besteck bis zum nächsten Einsatz gelagert werden kann. Eine andere Ablage ist ebenfalls möglich.

Der Besteckkorb ist bevorzugt dazu eingerichtet, Besteck ungeordnet aufzunehmen. Dabei steht weiter bevorzugt das Besteck im Besteckkorb im Wesentlichen in vertikalen Positionen. Das Besteck ist üblicherweise länglich, wobei der Besteckkorb weiter bevorzugt so geformt und dimensioniert ist, dass ein länglicher Abschnitt eines Bestecks oben aus dem Besteckkorb ragt. Das Besteck kann einen Nutzabschnitt und einen Griffabschnitt umfassen, wobei der Griffabschnitt des Bestecks im Besteckkorb bevorzugt nach unten orientiert ist, um den nach oben abstehenden Nutzabschnitt verbessert reinigen zu können. In einer weiteren Ausführungsform kann ein Besteck jedoch auch nach oben orientiert sein.

Das Besteck umfasst weiter bevorzugt ein Essbesteck, das Teil eines Tischgedecks sein kann. Beispielsweise kann das Besteck ein Messer, eine Gabel, einen Löffel oder ein Essstäbchen umfassen. Es ist weiter bevorzugt, dass das Besteck kein Kochwerkzeug umfasst. Als Kochwerkzeug werden handgehaltene Geräte betrachtet, die bei der Zubereitung eingesetzt werden, während Besteck allgemein erst beim Essen verwendet wird.

Die Sortiervorrichtung kann unabhängig von einem anderen Gerät in einem Haushalt betrieben werden. Nach einem weiteren Aspekt der vorliegenden Erfindung umfasst ein Geschirrspüler eine hierin beschriebene Sortiervorrichtung. Die Sortiervorrichtung kann in den Geschirrspüler integriert sein, sodass nach einem abgeschlossenen Reinigungsvorgang gereinigtes Besteck automatisch ausgeräumt und sortiert werden kann. Nach noch einem weiteren Aspekt umfasst die Erfindung ein System aus einem Geschirrspüler und einer Sortiervorrichtung.

Nach einem zweiten Aspekt der vorliegenden Erfindung umfasst ein Verfahren zum Sortieren von Besteck die Merkmale des unabhängigen Anspruchs 6, insbesondere Schritte des Abtastens eines Besteckkorbs; des Erkennens von Besteck im Besteckkorb; des Auswählens eines erkannten Bestecks; und des Ansteuerns eines Greifers, um das ausgewählte Besteck zu greifen und aus dem Besteckkorb in eine vorbestimmte Ablage zu bewegen. Dabei wird ein Besteck auf der Basis eines Grads ausgewählt, mit dem das Besteck mit anderem Besteck und/oder mit dem Besteckkorb verflochten ist.

Das Verfahren kann bevorzugt mittels einer hierin beschriebenen Sortiervorrichtung durchgeführt werden. Ein Teil des Verfahrens kann in Form eines Computerprogrammprodukts mit Programmcodemitteln vorliegen. Eine Verarbeitungseinrichtung kann elektronisch ausgeführt sein und beispielsweise einen programmierbaren Mikrocomputer oder Mikrocontroller umfassen. Das Computerprogrammprodukt kann auf einem computerlesbaren Datenträger abgespeichert sein. Merkmale oder Vorteile des Verfahrens können auf die Sortiervorrichtung bzw. das System oder den Geschirrspüler übertragen werden und umgekehrt.

Das Abtasten erfolgt bevorzugt so, dass Tiefeninformationen über eine Position und Lage eines Bestecks im Besteckkorb gewonnen werden. Dazu kann beispielsweise eine Tiefenkamera, eine Stereokamera oder eine ToF-Kamera verwendet werden. Das Erkennen von Besteck im Besteckkorb kann nach dem Prinzip der Mustererkennung mittels eines künstlichen neuronalen Netzwerks (KNN) erfolgen. Das KNN ist dazu trainiert, vorbestimmtes Besteck zu erkennen und zu klassifizieren.

Ein Besteck kann auf der Basis eines aus dem Besteckkorb ragenden Abschnitts erkannt werden. Ein Abschnitt des Bestecks, welches sich innerhalb des Besteckkorbs befindet, kann dann bezüglich des erkannten Bestecks ergänzt bzw. extrapoliert werden. So kann die Position oder Lage des Bestecks mit verbesserter Sicherheit bestimmt werden.

Beim Erkennen eines Bestecks kann bestimmt werden, wie wahrscheinlich es ist, dass die Bestimmung zutreffend ist. Dieser Umstand kann durch eine Konfidenz ausgedrückt werden. Je höher die Konfidenz ist, desto höher kann die beschriebene Wahrscheinlichkeit sein.

In einer Ausführungsform wird ein Besteck auf der Basis einer Konfidenz ausgewählt, mit der das Besteck erkannt wurde. Ein Besteck, das mit hoher Konfidenz erkannt wurde, kann bevorzugt entnommen werden, sodass ein Besteck, das mit einer geringeren Konfidenz erkannt wurde, erst später entnommen werden kann. Das Greifen und Bewegen des ausgewählten Bestecks kann so erleichtert sein.

Es kann bestimmt werden, wie stark ein Besteck mit einem anderen Besteck verhakt oder verkeilt ist. Dazu können mehrere Besteckstücke im Besteckkorb erkannt werden. Eine Verflechtung besteht üblicherweise auf einem Abschnitt eines Bestecks, der innerhalb des Besteckkorbs liegt und nicht direkt optisch abgetastet werden kann. Die Form eines erkannten Bestecks kann jedoch bekannt sein, sodass der Verflechtungsgrad bestimmt werden kann. Bevorzugt wird ein Besteck ausgewählt, dessen Verflechtungsgrad gering ist. Ein Besteck, dessen Verflechtungsgrad höher ist, kann zu einem späteren Zeitpunkt aus dem Besteckkorb entnommen werden. Der Verflechtungsgrad eines Bestecks kann sinken, wenn anderes Besteck entfernt wird, da Verflechtungspartner entfallen können. Das Entnehmen von Besteck kann dadurch verbessert flüssig und fehlerfrei durchgeführt werden.

In entsprechender Weise kann ein Besteck auf der Basis eines Grads ausgewählt werden, mit dem das Besteck mit dem Besteckkorb verflochten ist. Auch hier gilt, dass bevorzugt zunächst ein Besteck entnommen wird, dessen Verflechtungsgrad möglichst gering ist.

Der Kehrwert des Verflechtungsgrads kann Freiheitsgrad genannt werden. Für erkanntes Besteck im Besteckkorb kann jeweils das Produkt aus dem Freiheitsgrad und der Konfidenz gebildet werden, mit der das Besteck erkannt werden konnte. Dasjenige Besteck mit dem größten Produkt kann zuerst aus dem Besteckkorb entfernt werden.

Für ein zu entnehmendes Besteck kann eine Trajektorie bestimmt werden, entlang derer das Besteck möglichst erfolgreich aus dem Besteckkorb entfernt werden kann. Dazu können eine Form und/oder eine Lage des Bestecks berücksichtigt werden. Ferner können eines oder mehrere umgebende Objekte, insbesondere anderes Besteck oder der Besteckkorb selbst, berücksichtigt werden. Die Trajektorie kann so bestimmt werden, dass das Besteck im Wesentlichen entlang seiner Längsachse aus dem Besteckkorb gezogen wird. Eine Kollision mit einem anderen Objekt kann nach Möglichkeit vermieden werden. Zur Beurteilung einer Trajektorie kann ein Gaußprozess zum Einsatz kommen.

In noch einer weiteren Ausführungsform wird ein Griffpunkt bestimmt, an welchem das Besteck mit dem Greifer gegriffen werden kann. Dabei kann die Trajektorie bezüglich des Griffpunkts bestimmt werden. An einem Besteck können ein oder mehrere Griffpunkte vorgesehen sein, an denen der Greifer vorteilhaft ansetzen kann. Die Trajektorie kann derart bestimmt werden, dass der Greifer oder ein damit verbundenes Teil möglichst ebenfalls nicht mit einem anderen Objekt kollidiert oder daran entlangschleift.

In einer weiteren Ausführungsform kann der Greifer während des Herausziehens des ausgewählten Bestecks quer zur bestimmten Trajektorie oszilliert werden. Eine Frequenz oder Amplitude der Oszillation können so gewählt sein, dass ein verflochtenes Besteck sanft von anderem Besteck oder dem Besteckkorb entfernt werden kann. Auch eine komplexe Verflechtung von Besteck kann so sicher und ohne Beschädigung an einem Besteck aufgelöst werden. Umgangssprachlich mag das Oszillieren als Ruckeln bezeichnet werden.

Allgemein gilt, dass, falls ein Entfernungsvorgang eines ausgewählten Bestecks erfolglos ist und das Besteck mit dem Greifer nicht aus dem Besteckkorb entfernt werden kann, ein weiterer Versuch durchgeführt wird, nachdem wenigstens ein anderes Besteck aus dem Besteckkorb entfernt wurde. Das Verfahren kann solange durchgeführt werden, bis alles Besteck einzeln aus dem Besteckkorb entnommen und in der Ablage abgelegt wurde. In der Ablage kann das Besteck nach Klassen sortiert sein, denen das Besteck jeweils zugeordnet ist. Beispielhafte Klassen umfassen Teelöffel, Suppenlöffel, Kuchengabeln, Gabeln, Messer und Essstäbchen. Weitere Klassen können ebenfalls vorbestimmt sein.

Für das Erkennen eines erfolglosen Versuchs kann ein Kraftsensor vorgesehen sein, der z.B. einen mechanischen Widerstand ermittelt, der beim Entfernungsvorgang auftritt. Darüber hinaus kann eine ungewollte Bewegung des Besteckkorbs über eine Kamera bemerkt werden.

Einem erkannten Besteck kann eine Klasse zugeordnet sein. Für Elemente einer Klasse kann bekannt sein, wie stark sie zu einer Verflechtung neigen. Ein Besteck einer Klasse, deren Elemente zu geringerer Verflechtung neigen, können bevorzugt zuerst aus dem Besteckkorb herausgezogen werden.

Beispielsweise weist ein Tafelmesser üblicherweise entlang seiner Länge wenige Vorsprünge oder Abmessungsänderungen auf, sodass es kaum zu Verflechtungen neigen kann. Aus diesem Grund kann es vorteilhaft sein, zunächst Messer aus dem Besteckkorb zu entfernen, bevor anderes Besteck entnommen wird. Gabeln weisen erfahrungsgemäß die stärkste Tendenz zur Verflechtung mit anderem Besteck oder dem Besteckkorb auf. In einer Ausführungsform kann mit dem Entnehmen von Gabeln aus dem Besteckkorb gewartet werden, bis möglichst alles andere Besteck bereits entnommen wurde.

Nicht beschränkende Ausführungsformen der Erfindung werden nun unter Bezug auf die beiliegenden Figuren genauer beschrieben, in denen:
- Figur 1: einen Haushalt mit einem Geschirrspüler und einer Sortiervorrichtung für Besteck;
- Figur 2: ein Verfahren zum Sortieren von Besteck aus einem Besteckkorb; und
- Figur 3: beispielhaftes Besteck
darstellen.

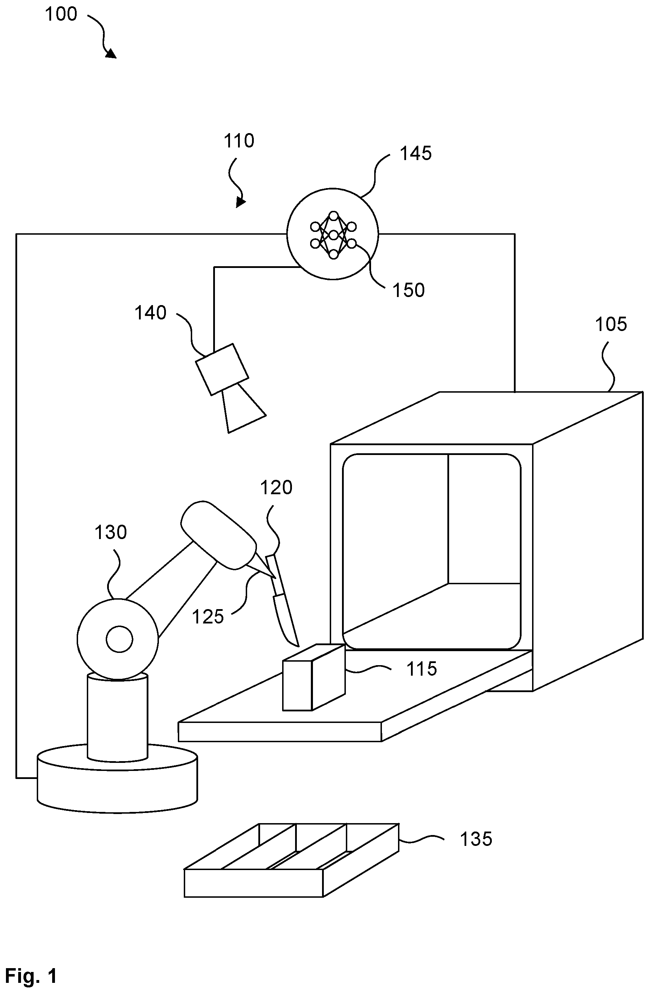

Figur 1 zeigt einen beispielhaften Haushalt 100 mit einem Geschirrspüler 105 und einer Sortiervorrichtung 110. Die Sortiervorrichtung 110 kann eigenständig arbeiten oder Teil des Geschirrspülers 105 sein.

Der Geschirrspüler 105 ist dazu eingerichtet, Küchenutensilien zu reinigen. Ein Aufnahmekorb bzw. ein Auszug zur Aufnahme der Küchenutensilien ist in Figur 1 nicht dargestellt. Zur Aufnahme von Besteck ist bevorzugt ein Besteckkorb 115 vorgesehen, der optional aus dem Geschirrspüler 105 entnommen werden kann. Üblicherweise ist der Besteckkorb 115 in einem Geschirrwagen angeordnet, der horizontal aus einem Bearbeitungsraum des Geschirrspülers 105 herausgezogen werden kann.

Der Besteckkorb 115 ist zur Aufnahme von Besteck 120 eingerichtet. Das Besteck 120 umfasst bevorzugt Essbesteck bzw. Tafelbesteck, das durch eine Person zur Nahrungsaufnahme verwendet werden kann. Üblicherweise wird Besteck 120 als Teil eines Tischgedecks im Haushalt 100 verwendet. Beispielhaftes Besteck 120 umfasst ein Essstäbchen, ein Messer, eine Gabel oder einen Löffel. Besteck 120 kann in unterschiedliche Klassen eingeteilt werden. Üblicherweise umfasst eine Klasse gleichartiges, gleichgroßes, dem gleichen Zweck gewidmetes oder aus dem gleichen Material bestehendes Besteck 120. Die Klassen können unterschiedlich fein abgestuft sein. In einer Ausführungsform können Messer aller Art in einer Klasse gesammelt sein; in einer anderen Ausführungsform können beispielsweise Tafelmesser, Vorspeisenmesser, Fischmesser, Obstmesser und Buttermesser unterschieden werden.

Die Sortiervorrichtung 110 umfasst einen Greifer 125, der beispielhaft an einem Arm 130 angebracht ist. Der Arm 130 oder eine korrespondierende Vorrichtung sind dazu eingerichtet, den Greifer 125 bezüglich des Besteckkorbs 115 zu bewegen. Der Greifer 125 ist üblicherweise nach Art einer Zange oder einer Pinzette ausgeführt. In einer anderen Ausführungsform kann auch beispielsweise ein pneumatischer Greifer, ein magnetischer Greifer oder ein thermoelastischer Greifer vorgesehen sein. Der Greifer 125 ist dazu eingerichtet, ein Besteck 120 zu greifen, sodass das Besteck 120 aus dem Besteckkorb 115 herausgezogen werden kann. Dazu kann der Greifer 125 mittels des Arms 130 passend bewegt werden. Das Besteck 120 kann dann zu einer Ablage 135 bewegt werden, wo das Besteck 120 abgelegt werden kann. Die Ablage 135 kann eine Trennung von Besteck 120 unterschiedlicher Klassen unterstützen, beispielsweise, indem unterschiedliche Fächer vorgesehen sind, wie in Figur 1 angedeutet ist. In einer weiteren Ausführungsform ist die Sortiervorrichtung 100 mit der Ablage 135 integriert ausgeführt, beispielsweise nach Art eines intelligenten Möbels. Die Sortiervorrichtung kann Bestandteil eines mobilen autonomen Roboters sein.

Die Sortiervorrichtung 110 umfasst ferner eine optische Abtastvorrichtung 140, die bevorzugt dazu eingerichtet ist, eine dreidimensionale Abtastung von Besteck 120 im Besteckkorb 115 durchzuführen. Dazu kann die Abtastvorrichtung 140 beispielsweise eine Stereokamera oder eine ToF-Kamera umfassen. In einer anderen Ausführungsform umfasst die Abtastvorrichtung 140 einen LiDAR-Sensor, einen Radarsensor oder einen Ultraschallsensor. Kombinationen unterschiedlicher Sensoren sind ebenfalls möglich. So kann die Abtastvorrichtung 140 eine optische Repräsentation, also ein Bild, von Besteck 120 im Besteckkorb 115 bereitstellen, wobei einzelnen Bildpunkten von Besteck 120 jeweils eine räumliche Position zugeordnet ist.

Die Abtastvorrichtung 140 kann am Arm 130 bzw. am Greifer 125 angebracht sein. Eine Position eines Bildpunkts eines Bestecks 120 bezüglich der Abtastvorrichtung 140 kann mit einer Stellung des Arms 130 verrechnet werden, um die Position bezüglich eines umgebenden Referenzsystems zu bestimmen, in welchem der Geschirrspüler 105 und/oder die Ablage 135 verortet sein können.

Eine Verarbeitungseinrichtung 145 ist dazu vorgesehen, eine Abtastung der Abtastvorrichtung 140 auszuwerten und den Greifer 125 bzw. den Arm 130 derart anzusteuern, dass ein Besteck 120 aus dem Besteckkorb 115 entnommen und in der Ablage 135 abgelegt wird. Dazu kann die Verarbeitungseinrichtung 145 ein künstliches neuronales Netzwerk 150 umfassen, welches darauf trainiert ist, ein Besteck 120 aufgrund einer optischen Abtastung zu erkennen. Gleichzeitig mit der Erkennung kann eine Klassifikation durchgeführt werden. Die Verarbeitungseinrichtung 145 kann ein geometrisches Modell erkannten Bestecks 120 im Besteckkorb 115 erzeugen. Eine Verflechtung eines Bestecks 120 mit einem anderen Besteck 120 oder dem Besteckkorb 115 kann auf der Basis des Modells bestimmt werden. In einer Ausführungsform ist für bekanntes Besteck 120 jeweils eine geometrische Form abgelegt. Das Modell kann auf der Basis geometrischer Formen erkannten Bestecks 120 bestimmt werden. Bezüglich einer geometrischen Form kann auch ein Schwerpunkt oder eine Masse bestimmt sein. Außerdem können einer oder mehrere Griffpunkte angegeben sein, an denen der Greifer 125 das Besteck 120 vorteilhaft greifen und halten kann.

Daten bezüglich Erfahrungen, die eine Sortiervorrichtung gemacht hat, können an einen zentral beim Hersteller der Sortiervorrichtung gehaltenen Data Lake gesendet werden. Durch Auswertung der Daten von vielen Sortiervorrichtungen können die Algorithmen, Strategien und/oder Verhaltensweisen der Sortiervorrichtung kontinuierlich verbessert werden.

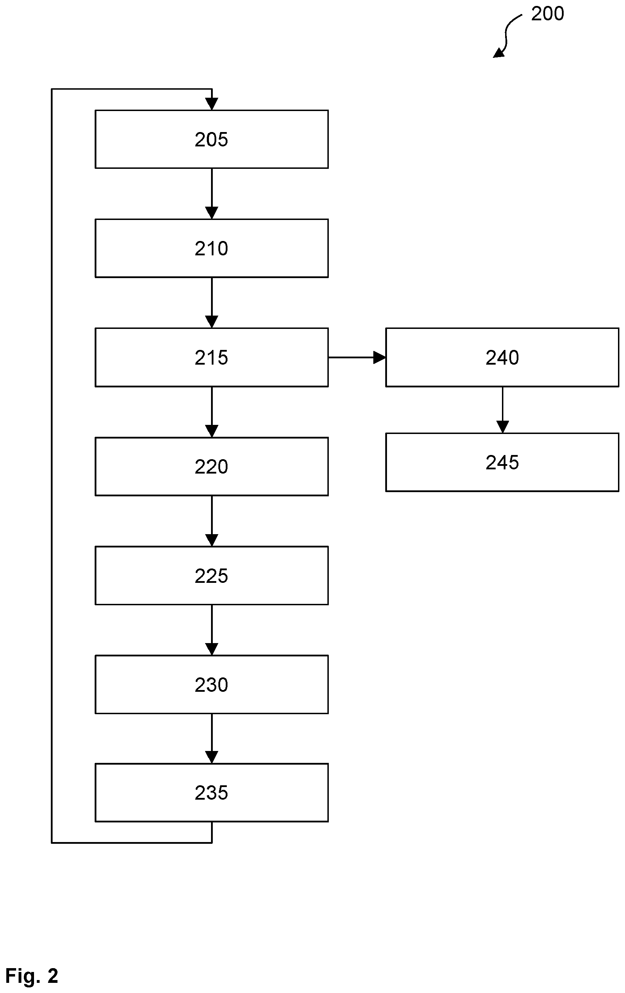

Figur 2 zeigt ein Ablaufdiagramm eines beispielhaften Verfahrens 200 zum Sortieren von Besteck 120 aus einem Besteckkorb 115. Das Verfahren 200 kann insbesondere mittels einer Sortiervorrichtung 110 ausgeführt werden.

In einem Schritt 205 kann ein Besteckkorb 115 mit Besteck 120 abgetastet werden. Die Abtastung erfolgt bevorzugt optisch, sodass ein Bild entsteht. In einem Schritt 210 können Tiefeninformationen für Bildpunkte des Bilds bestimmt werden. Dazu können zwei Bilder miteinander verarbeitet werden, die aus unterschiedlichen Perspektiven aufgenommen wurden, beispielsweise mittels einer Stereokamera. Alternativ können Tiefeninformationen auch mittels eines anderen als eines optischen Sensors bereitgestellt werden.

In einem Schritt 215 kann Besteck 120 im Besteckkorb 115 erkannt werden. Das Besteck 120 ist üblicherweise ungeordnet und im Wesentlichen senkrecht im Besteckkorb 115 derart aufgenommen, dass nur ein Abschnitt davon herausragt. Ein Besteck 120 kann auf der Basis einer optischen Abtastung eines herausragenden Abschnitts erkannt werden. Beim Erkennen kann eine Konfidenz bestimmt werden, die eine Qualität der Erkennung reflektieren kann. Je größer eine Konfidenz ist, desto größer ist eine Wahrscheinlichkeit, dass die zugeordnete Erkennung korrekterweise dem erkannten Gegenstand entspricht.

In einem Schritt 220 kann ein Verflechtungsgrad eines Bestecks 120 bestimmt werden. Der Verflechtungsgrad kann angeben, wie stark das Besteck 120 mit anderem Besteck 120 oder dem Besteckkorb 115 wechselwirkt. Eine mechanische Kraft, die zum Herausziehen des Bestecks 120 erforderlich ist, kann vom Verflechtungsgrad abhängig sein. Unter Umständen kann der Verflechtungsgrad so hoch sein, dass ein Herausziehen eines Bestecks 120 nicht möglich ist.

In einem Schritt 225 kann ein erkanntes Besteck 120 im Besteckkorb 115 ausgewählt werden. Dazu können eines oder mehrere Kriterien verwendet werden. Es ist bevorzugt, dass ein Besteck 120 ausgewählt wird, dessen Verflechtungsgrad möglichst gering ist. Gleichzeitig ist bevorzugt, dass ein Besteck 120 ausgewählt wird, dessen Konfidenz möglichst hoch ist. Außerdem kann berücksichtigt werden, dass Besteck 120 einer vorbestimmten Klasse bevorzugt ausgewählt wird. Dazu kann der Klasse eine Tendenz oder Neigung zu einem Verflechten oder Verkeilen mit einem anderen Besteck 120 oder dem Besteckkorb 115 zugeordnet sein. Ein Besteck 120 einer Klasse mit einer geringen solchen Neigung kann bevorzugt ausgewählt werden. Weiter kann berücksichtigt werden, wie gut ein Besteck 120 mittels des Greifers 125 gegriffen und/oder bewegt werden kann. Dazu kann beurteilt werden, ob ein vorbestimmter Griffpunkt an einem Besteck 120 zugänglich ist. Je besser ein Griffpunkt zugänglich ist, je höher eine ihm zugeordnete Griffsicherheit ist oder je geringer eine Kollision des Greifers 125 mit einem anderen Besteck 120 ist, desto bevorzugter kann ein Besteck 120 ausgewählt werden.

In einem Schritt 230 kann das ausgewählte Besteck 120 aus dem Besteckkorb 115 herausgezogen werden. Dazu kann das Besteck 120 entlang einer vorbestimmten Trajektorie gezogen werden, die dem Besteck 120 zugeordnet sein oder dynamisch bestimmt werden kann.

In einem Schritt 235 kann das herausgezogene Besteck 120 zur Ablage 135 bewegt und dort abgelegt werden. Besteck 120 unterschiedlicher vorbestimmter Klassen kann in der Ablage 135 passend gruppiert werden.

Die Schritte 205 bis 235 können nach Art einer Schleife durchlaufen werden, um ein Besteck 120 nach dem anderen aus dem Besteckkorb 115 in die Ablage 135 zu befördern. Optional kann ein anderes Objekt als ein Besteck 120, welches im Besteckkorb 115 bestimmt wird, daraus entnommen und an einem vorbestimmten Ort abgelegt werden. So können beispielsweise nicht kategorisierbare Küchenutensilien entnommen und gesammelt werden. Es ist zu beachten, dass nicht in jedem Durchlauf alle Schritte 205 bis 235 durchgeführt werden müssen. Beispielsweise können nacheinander mehrere Elemente aus dem Besteckkorb 115 entnommen werden, ohne die Schritte 205 bis 220 erneut durchführen zu müssen.

Befindet sich kein Besteck 120 mehr im Besteckkorb 115, so kann vom Schritt 215 in einen Schritt 240 übergegangen werden, in welchem bestimmt wird, dass kein weiteres Besteck 120 erkennbar ist. In diesem Fall kann das Verfahren 200 in einem Schritt 245 enden.

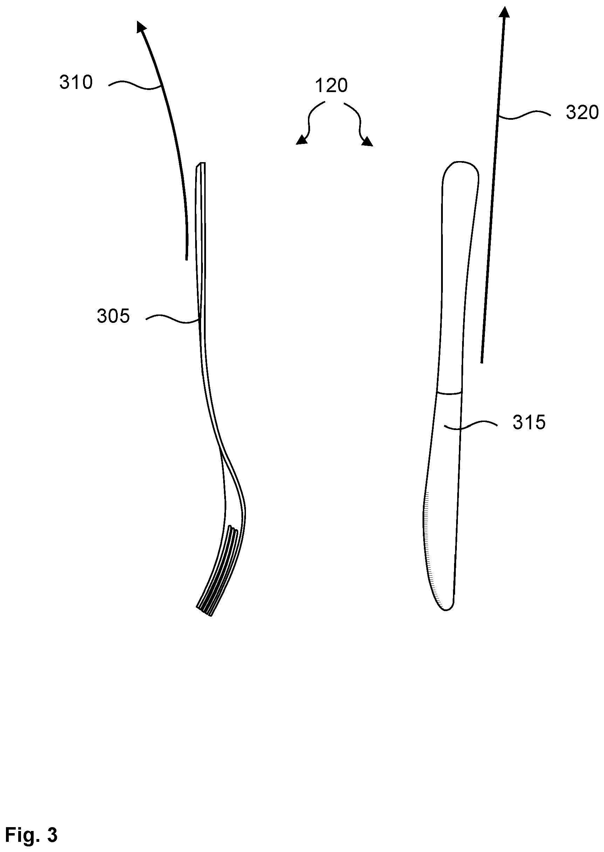

Figur 3 zeigt beispielhaftes Besteck 120 in zwei beispielhaften Ausführungsformen. Dargestellt sind eine Gabel 305 mit einer ersten Trajektorie 310 und einem Messer 315 mit einer zweiten Trajektorie 320.

Eine Trajektorie 310, 320 kann dem jeweiligen Besteck 305, 315 fest zugeordnet sein oder dynamisch bestimmt werden. Dabei folgt die Trajektorie 310, 320 bevorzugt einer Form des Bestecks 305, 315. Da die Gabel 305 entlang ihrer Längsachse geschwungen ist, kann auch die zugeordnete erste Trajektorie 310 geschwungen sein. Die zweite Trajektorie 320 kann insbesondere einer Form der Gabel 305 im Bereich ihrer Zinken folgen, wo eine Verflechtung mit einem anderen Besteck 120 oder dem Besteckkorb 115 am wahrscheinlichsten ist. Das Messer 315 hingegen ist im Wesentlichen gerade, wobei die zweite Trajektorie 320 ebenfalls gerade verläuft. Ein Verhaken, Verkeilen oder Verflechten des Messers 315 ist bei einer geraden Bewegungsrichtung am wenigsten wahrscheinlich. Trajektorien können bspw. mit Hilfe eines Gaußprozesses bewertet werden.

### Bezugszeichen

- 100: Haushalt
- 105: Geschirrspüler
- 110: Sortiervorrichtung
- 115: Besteckkorb
- 120: Besteck

- 125: Greifer
- 130: Arm
- 135: Ablage
- 140: Abtastvorrichtung
- 145: Verarbeitungseinrichtung
- 150: künstliches neuronales Netzwerk (KNN)

- 200: Verfahren
- 205: Besteckkorb abtasten
- 210: Tiefeninformationen bestimmen
- 215: Besteck erkennen
- 220: Verflechtungsgrad bestimmen
- 225: Besteck auswählen
- 230: ausgewähltes Besteck herausziehen
- 235: herausgezogenes Besteck ablegen
- 240: kein weiteres Besteck erkennbar
- 245: Ende

- 305: Gabel
- 310: erste Trajektorie
- 315: Messer
- 320: zweite Trajektorie

## Patentansprüche

1. Sortiervorrichtung (110) für Besteck (120), wobei die Sortiervorrichtung (110) folgendes umfasst:
- eine optische Abtastvorrichtung (140) zur Abtastung eines Besteckkorbs (115);
- einen beweglichen Greifer (125) für ein Besteck (120); und
- eine Verarbeitungseinrichtung (145), die dazu eingerichtet ist, Besteck (120) im Besteckkorb (115) zu erkennen; ein erkanntes Besteck (120) auszuwählen; und den Greifer (125) dazu anzusteuern, das ausgewählte Besteck (120) zu greifen und aus dem Besteckkorb (115) in eine vorbestimmte Ablage (135) zu bewegen;
**dadurch gekennzeichnet, dass**
- die Verarbeitungseinrichtung (145) dazu eingerichtet ist, ein Besteck (120) auf der Basis eines Grads auszuwählen, mit dem das Besteck (120) mit anderem Besteck (120) und/oder mit dem Besteckkorb (115) verflochten ist.

2. Sortiervorrichtung (110) nach Anspruch 1, wobei der Besteckkorb (115) zur Reinigung des Bestecks (120) in einem Geschirrspüler (105) eingerichtet ist.

3. Sortiervorrichtung (110) nach Anspruch 1 oder 2, wobei der Besteckkorb (115) dazu eingerichtet ist, Besteck (120) ungeordnet und in im Wesentlichen vertikalen Positionen aufzunehmen.

4. Sortiervorrichtung (110) nach einem der vorangehenden Ansprüche, wobei das Besteck (120) ein Messer (315), eine Gabel (305), einen Löffel oder ein Essstäbchen umfasst.

5. Geschirrspüler (105), umfassend eine Sortiervorrichtung (110) nach einem der vorangehenden Ansprüche.

6. Verfahren (200) zum Sortieren von Besteck (120); wobei das Verfahren (200) folgende Schritte umfasst:
- Abtasten (205) eines Besteckkorbs (115);
- Erkennen (215) von Besteck (120) im Besteckkorb (115);
- Auswählen (225) eines erkannten Bestecks (120); und
- Ansteuern (230) eines Greifers (125), um das ausgewählte Besteck (120) zu greifen und aus dem Besteckkorb (115) in eine vorbestimmte Ablage (135) zu bewegen;
**dadurch gekennzeichnet, dass**
- ein Besteck (120) auf der Basis eines Grads ausgewählt (225) wird, mit dem das Besteck (120) mit anderem Besteck (120) und/oder mit dem Besteckkorb (115) verflochten ist.

7. Verfahren (200) nach Anspruch 6, wobei ein Besteck (120) auf der Basis eines aus dem Besteckkorb (115) ragenden Abschnitts erkannt (215) wird.

8. Verfahren (200) nach einem der Ansprüche 6 oder 7, wobei ein Besteck (120) auf der Basis einer Konfidenz ausgewählt (225) wird, mit der das Besteck (120) erkannt wurde.

9. Verfahren (200) nach einem der Ansprüche 6 bis 8, wobei bezüglich einer Lage des Bestecks (120) und umgebender Objekte eine Trajektorie (310, 320) bestimmt wird entlang derer das Besteck (120) möglichst erfolgreich aus dem Besteckkorb (115) entfernt werden kann.

10. Verfahren (200) nach Anspruch 9, wobei ein Griffpunkt bestimmt wird, an dem das Besteck (120) mit dem Greifer (125) gegriffen werden kann; wobei die Trajektorie (310, 320) bezüglich des Griffpunkts bestimmt wird.

11. Verfahren (200) nach einem der Ansprüche 9 oder 10, wobei der Greifer (125) während des Herausziehens des ausgewählten Bestecks (120) quer zur bestimmten Trajektorie (310, 320) oszilliert wird.

12. Verfahren (200) nach einem der Ansprüche 6 bis 11, wobei einem erkannten Besteck (120) eine Klasse zugeordnet ist; und wobei ein Besteck (120) einer Klasse, deren Elemente zu geringerer Verflechtung neigen, bevorzugt zuerst aus dem Besteckkorb (115) herausgezogen wird.

13. System, das einen Geschirrspüler (105) und eine davon separate Sortiervorrichtung (110) nach einem der Ansprüche 1 bis 4 umfasst.

## Claims

1. Sorting device (110) for cutlery (120), wherein the sorting device (110) comprises the following:
- an optical scanning apparatus (140) for scanning a cutlery basket (115);
- a moveable gripper (125) for an item of cutlery (120); and
- a processing facility (145), which is designed to identify cutlery (120) in the cutlery basket (115); to select an identified item of cutlery (120); and to control the gripper (125) in order to grip the selected item of cutlery (120) and to move the same out of the cutlery basket (115) into a predetermined tray (135);
**characterised in that**
- the processing facility (145) is designed to select an item of cutlery (120) on the basis of a degree with which the item of cutlery (120) is interwoven with another item of cutlery (120) and/or with the cutlery basket (115).

2. Sorting device (110) according to claim 1, wherein the cutlery basket (115) is designed to clean the item of cutlery (120) in a dishwasher (105).

3. Sorting device (110) according to claim 1 or 2, wherein the cutlery basket (115) is designed to accommodate cutlery (120) in an unordered manner and in essentially vertical positions.

4. Sorting device (110) according to one of the preceding claims, wherein the item of cutlery (120) comprises a knife (315), a fork (305), a spoon or a chopstick.

5. Dishwasher (105) comprising a sorting device (110) according to one of the preceding claims.

6. Method (200) for sorting cutlery (120); wherein the method (200) comprises the following steps:
- scanning (205) a cutlery basket (115);
- identifying (215) cutlery (120) in the cutlery basket (115);
- selecting (225) an identified item of cutlery (120); and
- controlling (230) a gripper (125), in order to grip the selected item of cutlery (120) and to move the same out of the cutlery basket (115) into a predetermined tray (135);
**characterised in that**
- an item of cutlery (120) is selected (225) on the basis of a degree with which the item of cutlery (120) is interwoven with another item of cutlery (120) and/or with the cutlery basket (115).

7. Method (200) according to claim 6, wherein an item of cutlery (120) is identified (215) on the basis of a segment which projects from the cutlery basket (115).

8. Method (200) according to one of claims 6 or 7, wherein an item of cutlery (120) is selected (225) on the basis of a confidence with which the item of cutlery (120) has been identified.

9. Method (200) according to one of claims 6 to 8, wherein with respect to a position of the item of cutlery (120) and surrounding objects, a trajectory (310, 320) is determined, along which the item of cutlery (120) can be moved as successfully as possible out of the cutlery basket (115).

10. Method (200) according to claim 9, wherein a handle is determined at which the cutlery (120) can be gripped with the gripper (125); wherein the trajectory (310, 320) is determined with respect to the handle.

11. Method (200) according to one of claims 9 or 10, wherein the gripper (125) is oscillated at a right angle to the determined trajectory (310, 320) when the selected item of cutlery (120) is being removed.

12. Method (200) according to one of claims 6 to 11, wherein a category is assigned to an identified item of cutlery (120), and wherein an item of cutlery (120) of one category, the elements of which tend to interweave less, is preferably removed first from the cutlery basket (115).

13. System which comprises a dishwasher (105) and a sorting apparatus (110) which is separate thereto according to one of claims 1 to 4.

## Revendications

1. Dispositif de tri (110) pour couverts (120), dans lequel le dispositif de tri (110) comprend les éléments suivants :
- un dispositif de balayage optique (140) pour le balayage d'un panier à couverts (115) ;
- un préhenseur mobile (125) pour un couvert (120) ; et
- un dispositif de traitement (145) aménagé pour détecter les couverts (120) dans le panier à couverts (115) ; sélectionner un couvert (120) détecté ; et commander le préhenseur (125) pour qu'il saisisse le couvert (120) sélectionné et le déplace du panier à couverts (115) vers un rangement prédéterminé (135) ;
**caractérisé en ce que**
- le dispositif de traitement (145) est aménagé pour sélectionner un couvert (120) en fonction d'un degré d'imbrication du couvert (120) avec un autre couvert (120) et/ou avec le panier à couverts (115).

2. Dispositif de tri (110) selon la revendication 1, dans lequel le panier à couverts (115) est aménagé pour le lavage du couvert (120) dans un lave-vaisselle (105).

3. Dispositif de tri (110) selon la revendication 1 ou 2, dans lequel le panier à couverts (115) est aménagé pour accueillir des couverts (120) en désordre et dans des positions essentiellement verticales.

4. Dispositif de tri (110) selon l'une des revendications précédentes, dans lequel les couverts (120) comprennent un couteau (315), une fourchette (305), une cuillère ou une baguette.

5. Lave-vaisselle (105) comprenant un dispositif de tri (110) selon l'une des revendications précédentes.

6. Procédé (200) pour le tri de couverts (120) ; dans lequel le procédé (200) comprend les étapes suivantes :
- balayage (205) d'un panier à couverts (115) ;
- détection (215) de couverts (120) dans le panier à couverts (115) ;
- sélection (225) d'un couvert détecté (120) ; et
- commande (230) d'un préhenseur (125) pour saisir le couvert sélectionné (120) et le déplacer du panier à couverts (115) vers un rangement prédéfini (135) ;
**caractérisé en ce que**
- un couvert (120) est sélectionné (225) en fonction d'un degré d'imbrication du couvert (120) avec un autre couvert (120) et/ou avec le panier à couverts (115).

7. Procédé (200) selon la revendication 6, dans lequel un couvert (120) est détecté (215) en fonction d'une section dépassant du panier à couverts (115).

8. Procédé (200) selon l'une des revendications 6 ou 7, dans lequel un couvert (120) est sélectionné (225) en fonction d'une fiabilité avec laquelle le couvert (120) a été détecté.

9. Procédé (200) selon l'une des revendications 6 à 8, dans lequel une trajectoire (310, 320) le long de laquelle le couvert (120) peut être retiré du panier à couverts (115) avec le plus de réussite possible est déterminée par rapport à une position du couvert (120) et des objets environnants.

10. Procédé (200) selon la revendication 9, dans lequel un point de préhension auquel le couvert (120) peut être saisi avec le préhenseur (125) est déterminé ; dans lequel la trajectoire (310, 320) est déterminée par rapport au point de préhension.

11. Procédé (200) selon l'une des revendications 9 ou 10, dans lequel le préhenseur (125) oscille perpendiculairement à la trajectoire déterminée (310, 320) pendant le retrait du couvert sélectionné (120).

12. Procédé (200) selon l'une des revendications 6 à 11, dans lequel un couvert (120) est attribué à une catégorie ; et dans lequel un couvert (120) d'une catégorie dont les éléments ont moins tendance à s'imbriquer est retiré en priorité du panier à couverts (115).

13. Système comprenant un lave-vaisselle (105) et un dispositif de tri (110) distinct de celui-ci, selon l'une des revendications 1 à 4.
